(19) Europäisches Patentamt
European Patent Office
Office européen des brevets

(11) **EP 4 765 719 A1**

(12) **DEMANDE DE BREVET EUROPEEN**

(43) Date de publication:
**24.06.2026 Bulletin 2026/26**

(21) Numéro de dépôt: **25223205.3**

(22) Date de dépôt: **15.12.2025**

(51) Classification Internationale des Brevets (IPC):
**H04L 9/00** (2022.01) **H04L 9/30** (2006.01)

(52) Classification Coopérative des Brevets (CPC):
**H04L 9/002; H04L 9/3093**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **19.12.2024 FR 2414719**

(71) Demandeur: **Commissariat à l'Energie Atomique et aux Energies Alternatives**
**75015 Paris (FR)**

(72) Inventeurs:
• **VALEA, Emanuele**
**38054 GRENOBLE CEDEX 09 (FR)**
• **MARENCO, Andrea**
**38054 GRENOBLE CEDEX 09 (FR)**

(74) Mandataire: **Cabinet Beaumont**
**4, Place Robert Schuman**
**B.P. 1529**
**38025 Grenoble Cedex 1 (FR)**

(54) **PROCEDE ET DISPOSITIF POUR LA GENERATION D'UNE ERREUR GAUSSIENNE**

(57) La présente description concerne un dispositif configuré pour générer une valeur approximative en ajoutant du bruit à une sortie d'un circuit arithmétique équilibré, comprenant :
- le circuit arithmétique équilibré configuré pour générer une première valeur ;
- un circuit d'approximation configuré pour générer un masque de k bits sur la base d'une première distribution ; et
- un circuit logique configuré pour générer une deuxième valeur basée sur la première valeur, les k bits les moins significatifs de la deuxième valeur étant générés en appliquant le masque aux k bits les moins significatifs de la première valeur, les bits les plus significatifs des deuxièmes valeurs étant égaux aux bits les plus significatifs de la première valeur, la première distribution étant telle que la deuxième valeur correspond à la première valeur avec une valeur d'erreur ajoutée ayant une distribution gaussienne d'écart-type σ.

Fig 1

Processed by Luminess, 75001 PARIS (FR)

EP 4 765 719 A1

**Description**

Domaine technique

La présente description concerne de façon générale le domaine des circuits de calcul d'approximation.

Technique antérieure

Les procédés et circuits de calcul d'approximation sacrifient la précision au profit de performances améliorées, d'économies d'énergie ou de ressources et sont utilisés dans diverses applications, par exemple dans un apprentissage automatique, des systèmes embarqués ou du traitement multimédia, où une précision absolue n'est pas essentielle.

L'apprentissage avec erreurs (LWE) est un problème de la théorie de l'apprentissage informatique et de la cryptographie, qui sert de base à la construction de systèmes cryptographiques sûrs. Le LWE consiste à résoudre des systèmes d'équations linéaires en ajoutant un bruit aléatoire correspondant à une erreur. Ces systèmes sont complexes et, pour cette raison, sont utilisés pour la cryptographie post-quantique afin de garantir la sécurité contre les attaques informatiques quantiques. La mise en œuvre d'un problème LWE implique un additionneur d'approximation ayant une distribution d'erreur gaussienne. Des conceptions basées sur la technologie silicium sur isolant complétement déplété (FDSOI, de l'anglais "Fully Depleted Silicon On Insulator") ont été proposées en utilisant des circuits d'approximation qui peuvent obtenir une distribution similaire à une distribution gaussienne. Néanmoins, les erreurs dans des circuits à FDSOI (de l'anglais "Fully Depleted Silicon On Insulator", silicium sur isolant complétement déplété) ne sont produites que lorsqu'une transition de signal retardée est échantillonnée. Cette mise en œuvre est appelée mise à l'échelle excessive en fréquence, ou tension, et est également compatible avec des technologies autres que FDSOI. Lorsque le signal est stable, aucune erreur n'est introduite, ce qui pose un problème pour générer un bruit continu et cohérent. Par ailleurs, en raison de sa dépendance à l'égard des transitions de signaux, les caractéristiques d'erreur dans les circuits FDSOI présentent une forte dépendance sur l'ordre des entrées du circuit. Cette variabilité peut nuire à l'uniformité de la distribution gaussienne des erreurs utilisée pour le problème LWE, étant donné que des ordres d'entrée différents entraînent des erreurs différentes. Par ailleurs, des erreurs dans des circuits FDSOI sont générées le long d'un chemin critique du circuit, étant donné que le chemin critique est généralement celui ayant le retard le plus proche de la période d'horloge, la différence de temps étant généralement de l'ordre de la nanoseconde à la picoseconde. Pour une architecture d'additionneur, le chemin critique est celui qui évalue les bits les plus significatifs, ce qui ne peut générer que des erreurs plus grandes que celles obtenues à partir de la distribution gaussienne. Les erreurs devraient être générées sur quelques bits les moins significatifs, mais obtenir cela avec les propriétés FDSOI implique d'utiliser des mémoires tampons de grande taille, ce qui entraîne une surface, une consommation d'énergie et un coût élevés.

Il existe un besoin dans la technique pour un circuit et un procédé correspondant capable de générer des valeurs d'erreur qui suivent une distribution gaussienne.

Résumé de l'invention

Un mode de réalisation prévoit un dispositif configuré pour générer une valeur approximative en ajoutant du bruit à une sortie d'un circuit arithmétique équilibré, le dispositif comprenant :

- le circuit arithmétique équilibré configuré pour générer une première valeur codée par N bits, N étant un nombre entier supérieur ou égal à 2 ;
- un circuit d'approximation configuré pour générer un masque de k bits, k étant un nombre entier inférieur à N, sur la base d'une première distribution ; et
- un circuit logique configuré pour générer une deuxième valeur de N bits sur la base de la première valeur, les k bits les moins significatifs de la deuxième valeur étant générés en appliquant le masque aux k bits les moins significatifs de la première valeur, les N-k bits les plus significatifs des deuxièmes valeurs étant égaux aux N-k bits les plus significatifs de la première valeur,

la première distribution étant telle que la deuxième valeur correspond à la première valeur avec l'ajout d'une valeur d'erreur, la valeur d'erreur ajoutée ayant une distribution gaussienne d'écart-type $\sigma$.

Selon un mode de réalisation, le circuit logique est configuré pour appliquer une opération OU-EXCLUSIF entre la valeur du masque et les k bits les moins significatifs de la première valeur.

Selon un mode de réalisation, les k-bits du masque sont automatiquement programmés à 0, sur la base d'un signal de commande.

Selon un mode de réalisation, le dispositif susmentionné comprend en outre une porte ET configurée pour effectuer une opération ET entre le masque et le signal de commande, le circuit logique étant configuré pour générer la deuxième valeur sur la base de la sortie de la porte ET.

Selon un mode de réalisation, le circuit d'approximation est configuré pour générer le masque sur la base d'une entrée codée par un nombre y de bits, y étant un nombre entier, généré par une source d'entropie.

Selon un mode de réalisation, la source d'entropie est un générateur de nombres aléatoires matériel.

Selon un mode de réalisation, la source d'entropie est en outre configurée pour fournir une valeur d'entrée au circuit arithmétique.

Selon un mode de réalisation, le circuit d'approximation comprend un nombre k de fonctions booléennes, chaque fonction booléenne étant configurée pour générer un bit du masque sur la base de l'entrée à y bits.

Selon un mode de réalisation, le circuit arithmétique est un circuit additionneur.

Selon un mode de réalisation, le circuit logique comprend un nombre k de portes OU-EXCLUSIF, la i-ième porte OU-EXCLUSIF, pour $0 \leq i \leq k-1$, étant configurée pour effectuer une opération OU-EXCLUSIF entre le (i+1)-ième bit le moins significatif du masque et le (i+1)-ième bit le moins significatif de la première valeur.

Selon un mode de réalisation, la deuxième valeur est fournie à un circuit configuré pour effectuer une opération de cryptographie post-quantique sur la base de la deuxième valeur.

Un mode de réalisation prévoit un procédé de génération d'une valeur approximative correspondant à une valeur arithmétique à laquelle est ajouté un bruit ayant une distribution gaussienne d'écart-type $\sigma$, le procédé comprenant :

- la génération d'une première valeur de N bits, N étant un nombre entier, par un circuit arithmétique équilibré, N étant un nombre entier supérieur ou égal à 1 ;
- la génération d'un masque de k bits, k étant un nombre entier inférieur ou égal à N, par un circuit d'approximation, sur la base d'une première distribution ; et
- la génération d'une deuxième valeur, par un circuit logique, en appliquant le masque aux k bits les moins significatifs de la première valeur, les N-k bits les plus significatifs de la deuxième valeur étant égaux à la première valeur ;

la première distribution étant telle que la deuxième valeur correspond à la première valeur avec une valeur d'erreur ajoutée, la valeur d'erreur ajoutée ayant une distribution gaussienne d'écart-type $\sigma$.

Un mode de réalisation prévoit un procédé de conception d'une architecture du circuit d'approximation du circuit ci-dessus, dans lequel le procédé comprend :

- l'identification, par un dispositif externe, d'une distribution gaussienne basée sur la valeur de l'écart-type, l'identification comprenant en outre le calcul, par le dispositif externe, de la valeur des nombres entiers k et y ;
- pour chaque valeur de masque de k bits, la détermination, par le dispositif externe, d'au moins une valeur d'erreur associée en appliquant le masque à chaque valeur de k bits, chaque valeur d'erreur ajoutée étant associée à une fréquence pour la valeur de masque ;
- la détermination, par le dispositif externe, de la première distribution, sur la base des valeurs d'erreur et de leur fréquence associée pour chaque valeur de masque ; et
- la détermination, par le dispositif, de l'architecture du circuit d'approximation, l'architecture déterminée étant capable de générer des valeurs de masque de k bits, sur la base de valeurs d'entrée à y bits, conformément à la première distribution.

Selon un mode de réalisation, le dispositif externe est configuré pour déterminer la valeur du nombre entier y en résolvant l'équation $2^{y+1} \times h(P\sigma) \simeq 1$ et pour déterminer la valeur de k en résolvant l'équation $2^{k-1}-1 < P\sigma \leq 2^k-1$, où P est un nombre réel positif prédéterminé.

Selon un mode de réalisation, la détermination, par le dispositif, de l'architecture du circuit d'approximation comprend la détermination d'un nombre k de fonctions booléennes, chaque fonction booléenne étant configurée pour générer un bit du masque, sur la base de l'entrée de y bits.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est un schéma-blocs illustrant un circuit configurable de précision, selon un mode de réalisation de la présente description ;

la figure 2 est un schéma-blocs illustrant un circuit d'approximation relié à un circuit logique, selon un mode de réalisation de la présente description ;

la figure 3A est un schéma-blocs d'un dispositif configuré pour déterminer une architecture ;

la figure 3B est un organigramme illustrant des étapes d'un procédé de conception du circuit d'approximation, selon un mode de réalisation de la présente description ;

la figure 4A et la figure 4B sont des histogrammes liés à une distribution gaussienne ;

la figure 5A est un tableau illustrant la relation entre les valeurs de masque et les valeurs d'erreur ;

la figure 5B est un tableau reprenant les valeurs d'erreur couvertes par chaque valeur de masque ;

la figure 6 représente un algorithme d'extraction de la distribution des masques, selon un mode de réalisation de la présente description ;

la figure 7 est un histogramme de la distribution du masque ; et

la figure 8 est un diagramme de Venn à partir duquel les fonctions booléennes sont, par exemple, extraites.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou 10° près, de préférence à 5 % ou 5° près.

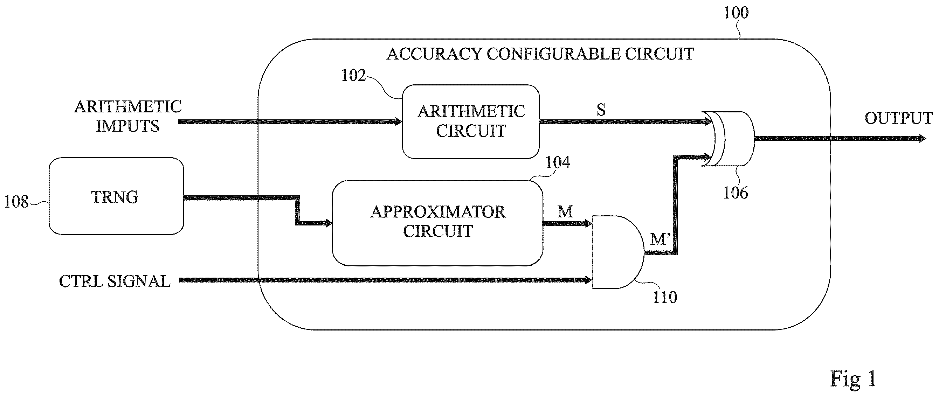

La figure 1 est un schéma-blocs illustrant un circuit configurable de précision 100 (ACCURACY CONFIGURABLE CIRCUIT), selon un mode de réalisation de la présente description. En particulier, le circuit configurable de précision 100 est configuré pour générer des valeurs correspondant à des valeurs générées par un circuit arithmétique 102 (ARITHMETIC CIRCUIT) ajouté à un bruit aléatoire, suivant une distribution gaussienne ayant un écart-type donné $\sigma$.

Le circuit configurable de précision 100 comprend le circuit arithmétique 102, un circuit d'approximation 104 (APPROXIMATOR CIRCUIT) et un circuit logique 106. Le circuit arithmétique 102 est configuré pour générer une valeur de sortie S et le circuit d'approximation 104 est configuré pour générer un masque M. Par exemple, la valeur de sortie S est codée par un nombre N de bits, avec $1 \leq k \leq N$. Par exemple, la valeur du nombre entier k dépend de l'écart-type $\sigma$.

Le circuit arithmétique 102 est un circuit équilibré, ce qui signifie que toutes les sorties possibles du circuit arithmétique 102 sont équiprobables. Par ailleurs, dans certains modes de réalisation, la distribution des bits des valeurs de sortie comprend le même nombre de 1 et de 0. Le circuit arithmétique 102 est, par exemple, un circuit additionneur. Par ailleurs, la valeur de sortie S correspond à une valeur précise, qui ne comporte aucun bruit. Le circuit arithmétique 102 est par exemple configuré pour générer la valeur de sortie S à partir de valeurs d'entrée (ARITHMETIC INPUTS). Par exemple, les valeurs d'entrée sont des entrées aléatoires, par exemple générées par un générateur de nombres aléatoires (non représenté en figure 1).

Le circuit d'approximation 104 est configuré pour produire un masque M qui est utilisé pour corrompre le résultat correct du circuit arithmétique 102. Le masque M généré et la sortie S sont par exemple fournis au circuit logique 106, qui est configuré pour corrompre la valeur de sortie S en lui appliquant le masque M. Le circuit logique 106 produit un résultat corrompu (OUTPUT) correspondant à S+e, où e suit une distribution gaussienne de moyenne 0 et d'écart-type $\sigma$. Le résultat corrompu est par exemple fourni à un circuit cryptographique post-quantique (non représenté en figure 1) configuré pour effectuer des opérations cryptographiques post-quantiques sur la base de la valeur corrompue.

En particulier, le circuit logique 106 est configuré pour inverser sélectivement les k bits les moins significatifs de la valeur de sortie S en fonction du masque M. Le circuit logique 106 comprend par exemple un nombre k de portes OU-EXCLUSIF, chacune configurée pour effectuer une opération OU-EXCLUSIF entre un bit parmi les k bits les moins significatifs de la valeur de sortie S et un bit parmi les k bits du masque M. Les N-k bits les plus significatifs de la valeur de sortie S sont par exemple propagés par le circuit logique 106 sans modification.

Le circuit d'approximation 104 est par exemple configuré pour générer le masque M sur la base d'une valeur d'entrée de taille y, y étant un nombre entier dépendant de la valeur de l'écart-type $\sigma$. Le circuit d'approximation 104 reçoit par exemple des valeurs d'entrée générées par une source d'entropie, telle qu'un circuit générateur de nombres aléatoires matériel 108 (TRNG). Dans un exemple, le circuit générateur de nombres aléatoires matériel 108 est en outre configuré pour générer et fournir les valeurs d'entrée destinées au circuit arithmétique 102. Par ailleurs, la distribution des valeurs générées par le générateur de nombres aléatoires matériel 108 est une distribution uniforme.

Dans l'exemple de la figure 1, le circuit configurable de précision 100 comprend en outre k portes ET 110, chacune configurée pour recevoir à l'une de ses entrées un bit correspondant du masque M et à son autre entrée un signal de commande (CTRL SIGNAL). Par exemple, le signal de commande est un signal binaire égal à 0 ou 1 selon que la fonction de précision configurable doit être activée ou non. Dans cet exemple, la sortie du circuit d'approximation 104 est reliée aux entrées du circuit logique 106 par l'intermédiaire des portes ET 110. Les portes ET 110 sont configurées pour effectuer une opération ET entre chacune des valeurs du masque M et la valeur binaire du signal de commande. Par exemple, si le signal de commande est égal à la valeur binaire 0, le circuit configurable de précision 100 fonctionne en mode de précision totale, et les portes ET 110 fournissent en sortie un masque M' à k bits tous réglés sur 0 et le fournissent au circuit logique 106. La sortie du circuit logique 106 est alors égale à la valeur de sortie S du circuit arithmétique 102. Sinon, si le signal de commande est égal à la valeur binaire 1, le circuit configurable de précision 100 fonctionne en mode d'approximation, et les portes ET fournissent en sortie un masque M' égal au masque M et le fournissent au circuit logique 106. La sortie du circuit logique 106 est alors égale à S+e.

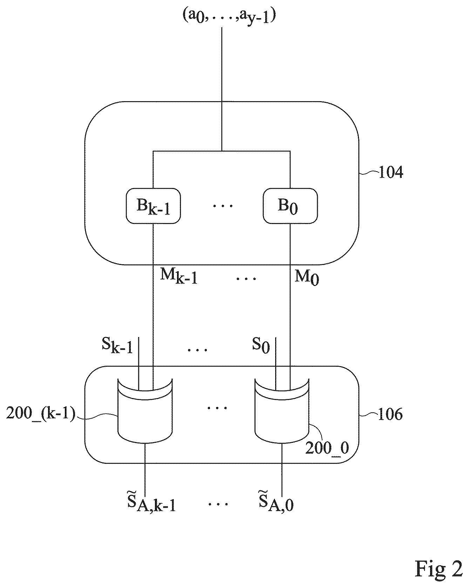

La figure 2 est un schéma-blocs illustrant plus en détail le circuit d'approximation 104 et le circuit logique 106 selon un mode de réalisation de la présente description.

Le circuit d'approximation 104 comprend par exemple k circuits de fonction booléenne $B_0$ à $B_{k-1}$. Le circuit générateur de nombres aléatoires matériel 108 de la figure 1 est configuré pour fournir une valeur d'entrée codée sur un nombre y de bits $a_0$ à $a_{y-1}$. Les k circuits de fonction booléenne sont configurés pour générer les k bits $M_0$ à $M_{k-1}$ du masque M. Par exemple, pour chaque $i \in \{0, \cdots, k-1\}$, le circuit de fonction booléenne $B_i$ est configuré pour générer le i-ième bit $M_i$ du masque M.

Le circuit logique 106 comprend par exemple k portes OU-EXCLUSIF 200_0 à 200_(k-1). Par exemple, pour chaque $i \in \{0, \cdots, k-1\}$, la porte OU-EXCLUSIF 200_i est configurée pour effectuer une opération OU-EXCLUSIF entre le i-ième bit $M_i$ du masque M et le i-ième bit le moins significatif $S_i$ de la valeur de sortie générée par le circuit arithmétique 102. Chaque porte OU-EXCLUSIF 200_i génère alors un bit $\tilde{S}_{A,i}$. Les k bits $\tilde{S}_{A,0}$ à $\tilde{S}_{A,k-1}$ sont les k bits les moins significatifs du résultat approximatif OUTPUT, fourni en sortie par le circuit configurable de précision 100. En particulier, si la valeur de sortie S est codée sur un nombre N de bits $S_0$ à $S_{N-1}$, le résultat approximatif est la séquence de bits $S_{N-1}...S_k\tilde{S}_{A,k-1}...\tilde{S}_{A,0}$. Les k bits les moins significatifs du résultat approximatif sont approximatifs et les N-k bits les plus significatifs sont précis et proviennent directement du résultat précis.

Le circuit d'approximation 104 est alors configuré pour recevoir des entrées aléatoires et crée une distribution de masque. En particulier, la distribution du masque n'est pas une distribution gaussienne, mais permet la création d'une distribution d'erreur gaussienne lorsqu'elle est combinée avec les résultats aléatoires précis du circuit arithmétique 102 à l'aide du circuit logique 106.

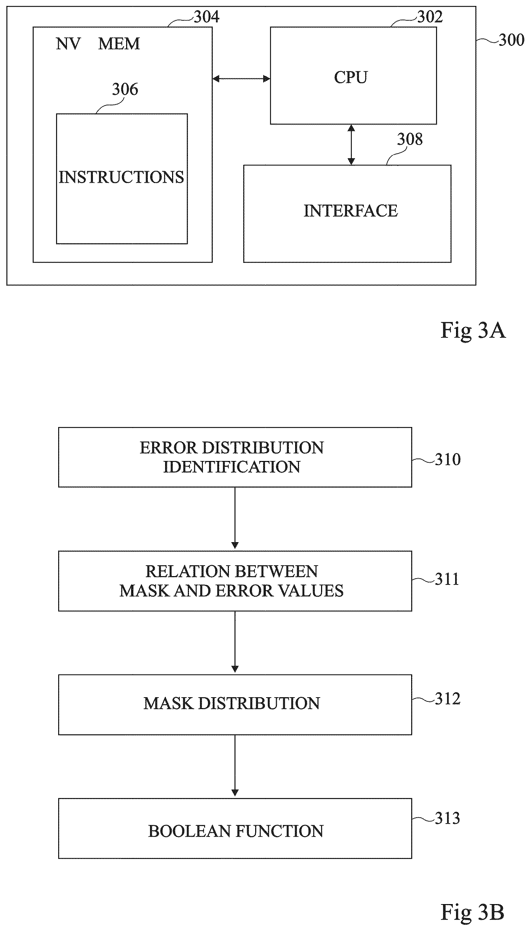

La figure 3A est un schéma-blocs illustrant un dispositif 300 configuré pour déterminer une architecture pour les portes de fonction booléenne $B_0$ à $B_{k-1}$.

Le dispositif 300 est, par exemple, un dispositif externe tel qu'un ordinateur. En particulier, le dispositif 300 est par exemple un dispositif distinct du circuit configurable de précision 100. Le dispositif 300 comprend une unité de traitement 302 (CPU) reliée à une mémoire non volatile 304 (NV MEM). La mémoire non volatile 304 stocke par exemple des instructions 306 (INSTRUCTIONS). Dans l'exemple de la figure 3A, la mémoire non volatile 304 se trouve dans le dispositif 300. Dans des variantes de mode de réalisation, la mémoire non volatile 304 est une mémoire qui est externe au dispositif 300. Le dispositif 300, par exemple, comprend en outre une interface 308 (INTERFACE) reliée à l'unité de traitement 302. L'unité de traitement 302 est alors configurée pour exécuter l'instruction 306. Les instructions 306 sont telles que leur exécution entraîne la génération, par l'unité de traitement 302, d'une architecture des circuits de fonctions booléennes $B_0$ à $B_{k-1}$. Par ailleurs, l'unité de traitement 302 est configurée pour exécuter les instructions 306 en fonction d'une valeur donnée de l'écart-type $\sigma$. Cette valeur est par exemple fournie à l'unité de traitement 302 par un utilisateur et par l'intermédiaire de l'interface 308. L'unité de traitement 302 est, par exemple, également configurée pour fournir l'architecture générée des circuits de la fonction booléenne $B_0$ à $B_{k-1}$, par exemple à l'utilisateur et par l'intermédiaire de l'interface 308.

La figure 3B est un organigramme illustrant des étapes d'un procédé de conception du circuit d'approximation 102 selon un mode de réalisation de la présente description. En particulier, la réalisation de ces étapes est effectuée par le dispositif 300, au moyen de l'exécution de l'instruction 306, et résulte en une architecture des circuits de fonctions

booléennes $B_0$ à $B_{k-1}$.

Dans une première étape 310 (ERROR DISTRIBUTION IDENTIFICATION), la distribution d'une erreur sur un nombre limité de cas est déterminée. La distribution de l'erreur est une distribution gaussienne discrétisée avec une moyenne nulle et un écart-type $\sigma$. Par exemple, la valeur de $\sigma$ est un paramètre d'entrée, par exemple fixé à un niveau basé sur la distribution d'erreur souhaitée, qui dépendra par exemple de l'application du circuit configurable de précision.

On considère que toute la probabilité cumulée de la distribution gaussienne est dans l'intervalle R = [-P$\sigma$, P$\sigma$], où P est une valeur positive. Par exemple, dans le cas où P est égal à 3, on considère que toute la probabilité cumulée est dans l'intervalle [-3$\sigma$,3$\sigma$] , au lieu de 99,73 % de la distribution cumulée.

La valeur du nombre entier k est par exemple égale au nombre approprié de bits pour couvrir jusqu'à l'erreur maximale appartenant à l'intervalle. La réalisation de l'étape 310 comprend également la détermination de la valeur de k. Par exemple, la valeur de k est telle que l'erreur maximale, correspondant à $\lfloor P\sigma \rfloor$ (la partie entière de $P\sigma$), est telle que $2^{k-1}$ - 1 < P$\sigma$ $\leq 2^k$ -1.

La réalisation de l'étape 310 comprend l'évaluation de la fonction de densité gaussienne h pour chaque valeur entière x appartenant à l'intervalle R. En particulier, la fonction de densité gaussienne h pour la distribution gaussienne de moyenne 0 et d'écart-type $\sigma$ est telle que :

[Math 1]

$$h(x) = \frac{1}{\sigma\sqrt{2\pi}} exp\left(-\frac{x^2}{2\sigma^2}\right), x \in [-P\sigma, P\sigma].$$

Un premier histogramme $\tilde{h}$ correspondant à la distribution d'une densité gaussienne discrétisée est obtenu en évaluant h(x) pour tout entier x dans l'intervalle R.

La valeur du nombre entier y est déterminée de sorte que la valeur binaire d'un histogramme redimensionné H soit égale à un. En particulier, l'histogramme redimensionné est tel que H(X) = $2^{y+1} \times h(X) \simeq 1$, où X est l'erreur maximale définie ci-dessus comme étant égale à $\lfloor P\sigma \rfloor$ . Par ailleurs, l'histogramme redimensionné est tel que la somme de sa valeur binaire entière soit égale à $2^{y+1}$. L'étape 310 comprend en outre la résolution $2^{y+1} \times h(X) \simeq 1$. En d'autres termes, l'étape 310 comprend en outre le calcul de 1/h(X) et la recherche de sa puissance de 2 la plus proche, désignée par |1/h(X)|$_2$. La valeur de y est alors obtenue en calculant $log_2$(|1/h(X)|$_2$)-1.

En particulier, le facteur de redimensionnement est $2^{y+1}$ et non $2^y$, car le circuit arithmétique 102 est un circuit équilibré. Par conséquent, les erreurs générées par l'inversion des sorties ont la même probabilité d'être positives ou négatives.

Par exemple, dans le cas où l'écart-type $\sigma$ est égal à 2 et que la valeur P est fixée à 3, la distribution gaussienne à évaluer se situe dans l'intervalle $R$ = [-6,6]. Par conséquent, l'erreur la plus importante est égale à 6. La valeur de k est égale à 3. La puissance de 2 la plus proche de la valeur de 1/h(6) est 512. La valeur de y est égale à 8.

Pour chaque valeur entière x dans l'intervalle R, la valeur H(x) est déterminée comme étant l'entier le plus proche de la valeur $2^{y+1} \times h(x)$. Afin de s'assurer que la somme de toutes les valeurs H(x), $x \in R$, est égale à $2^{y+1}$, le dispositif 300 est configuré pour vérifier si la somme est effectivement égale à $2^{y+1}$ et, si ce n'est pas le cas, pour ajuster les valeurs de H(x) afin que la somme soit égale à $2^{y+1}$.

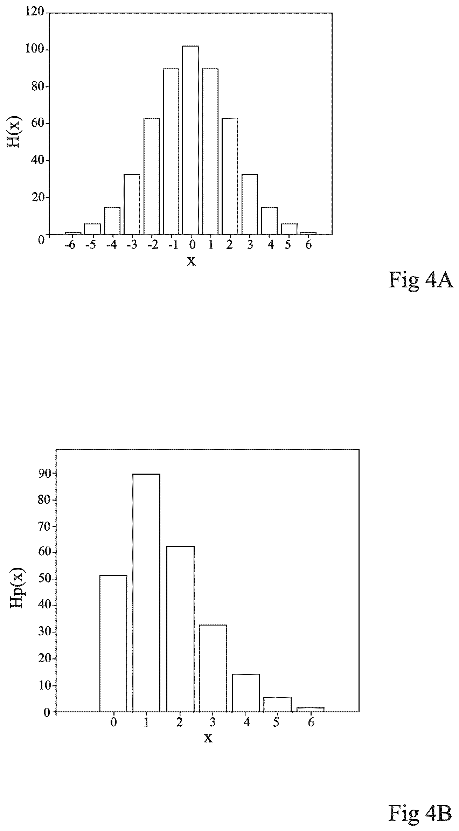

La figure 4A représente un histogramme H relatif à une distribution gaussienne d'écart-type égal à 2 avec des valeurs dans l'intervalle $R$ = [-6,6]. En particulier, l'histogramme H comprend 13 cases, chaque case étant associée à une valeur entière dans l'intervalle R. Par ailleurs, la somme de toutes les cases est égale à 512 = $2^{8+1}$ et H (6) =H (-6) =1.

L'étape 310 comprend en outre la détermination d'un histogramme positif Hp correspondant à la partie positive de l'histogramme H, c'est-à-dire Hp(x)=H(x), $x \in \{1, \cdots, \lfloor P\sigma \rfloor\}$ et avec Hp(0)=H(0)/2.

La figure 4B représente un histogramme positif Hp associé à l'histogramme H représenté à la figure 4A. En particulier, l'histogramme Hp comprend 7 cases, chaque case étant associée à une valeur entière dans l'intervalle [0,6]. De plus, la distribution gaussienne étant symétrique, la somme sur toutes les cases est égale à 216 = $2^{8+1}$/2 . De plus, Hp(0)=H(0)/2.

Dans une étape 311 (RELATION BETWEEN MASK AND ERROR VALUES), la relation entre des valeurs de masque et des valeurs d'erreur est déterminée. Le dispositif 300 est par exemple configuré pour déterminer toutes les valeurs possibles à k bits, c'est-à-dire pour déterminer $2^k$ valeurs. Ces valeurs correspondent à l'ensemble des masques possibles, ainsi qu'à l'ensemble des combinaisons possibles $S_0, \cdots, S_{k-1}$, pour les k bits les moins significatifs de la valeur de sortie S. Par ailleurs, le masque sur k bits tous égaux à 0 n'est pas considéré. Ainsi, seules $2^k$ - 1 valeurs de masque sont déterminées. Pour chaque masque, le dispositif 300 est configuré pour générer, pour chaque combinaison $S_0, \cdots, S_{k-1}$, le résultat d'une opération OU-EXCLUSIF entre elles.

Le dispositif 300 est configuré pour déterminer les valeurs d'erreur et leur fréquence dans les $2^k$ combinaisons en effectuant une opération OU-EXCLUSIF entre chaque valeur de masque et chaque combinaison de k bits les moins significatifs de la valeur de sortie S. Étant donné que le circuit arithmétique 102 est un circuit équilibré, toutes les valeurs à l'intérieur de la table de somme sont équiprobables. Le nombre d'erreurs positives qui peuvent être générées est donc égal au nombre d'erreurs négatives. Par conséquent, le nombre d'erreurs que chaque masque peut générer et leur fréquence dépendent uniquement du nombre de bits égaux à un 1 binaire à l'intérieur du masque. Le nombre de bits égaux à un 1 binaire dans la valeur du masque est noté u, avec $1 \leq u \leq k$.

Le nombre d'erreurs différentes est égal à $2^{u-1}$ et chaque erreur apparaît avec la fréquence de $\frac{1}{2^{u-1}}$ dans la mesure où toutes les sorties S ont la même probabilité.

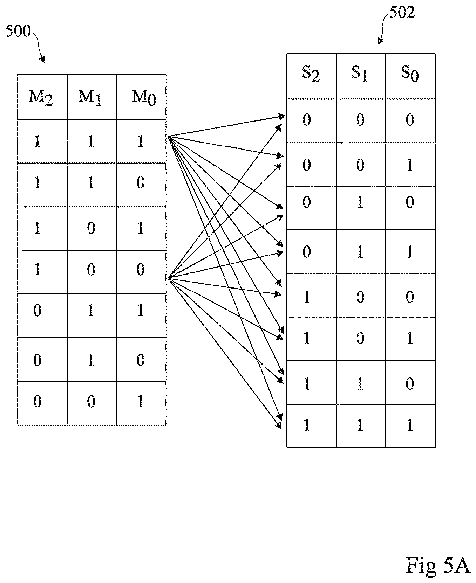

La figure 5A représente deux tableaux 500 et 501 illustrant la relation entre des valeurs de masque et des valeurs d'erreur. En particulier, les tableaux 500 et 502 illustrent la relation entre les valeurs de masque et les valeurs d'erreur pour l'exemple exposé en relation avec l'étape 310, avec R=[-6,6], k=3 et y=8.

Le tableau 500 comprend toutes les valeurs de masque possibles. Les valeurs de masque sont codées sur k=3 bits et le masque de valeur 000 n'est pas pris en compte. Il y a donc $2^3 - 1 = 7$ valeurs de masque possibles. Le tableau 502 comprend l'ensemble des k bits les moins significatifs possibles, $S_2$, $S_1$ et $S_0$ de la valeur de sortie S. Il y a donc $2^3 = 8$ combinaisons possibles pour les 3 bits les moins significatifs de la valeur de sortie S.

Lorsqu'une opération OU-EXCLUSIF est effectuée entre le masque 111 et la combinaison 000, la valeur obtenue est 111. La valeur d'erreur, correspondant à la valeur absolue de la différence entre $S_2S_1S_0$ et le résultat des opérations OU-EXCLUSIF, est égale à |0 - 7| = 7. Lorsqu'une opération OU-EXCLUSIF est effectuée entre le masque 111 et la combinaison 001, la valeur obtenue est 110. La valeur d'erreur est égale à |1 - 6| = 5. Lorsqu'une opération OU-EXCLUSIF est effectuée entre le masque 111 et la combinaison 010, la valeur obtenue est 101. La valeur d'erreur est égale à |2 - 5| = 3. Lorsqu'une opération OU-EXCLUSIF est effectuée entre le masque 111 et la combinaison 011, la valeur obtenue est 100. La valeur d'erreur est égale à |3 - 4| = 1. Lorsqu'une opération OU-EXCLUSIF est effectuée entre le masque 111 et la combinaison 100, la valeur obtenue est 011. La valeur de l'erreur est égale à |4 - 3| = 1. Lorsqu'une opération OU-EXCLUSIF est effectuée entre le masque 111 et la combinaison 101, la valeur obtenue est 010. La valeur d'erreur est égale à |5 - 2| = 3. Lorsqu'une opération OU-EXCLUSIF est effectuée entre le masque 111 et la combinaison 110, la valeur obtenue est 001. La valeur de l'erreur est égale à |6 - 1| = 5. Lorsqu'une opération OU-EXCLUSIF est effectuée entre le masque 111 et la combinaison 111, la valeur obtenue est 000. La valeur de l'erreur est égale à |7 - 0| = 7. Ainsi, l'application du masque 111 résulte en 4 erreurs différentes (1,3,5,7), chacune ayant une fréquence de $\frac{1}{4}$.

L'identification des valeurs d'erreur et de leurs fréquences pour les autres valeurs de masque s'effectue de la même façon. L'application du masque 110 résulte en 2 erreurs différentes (2,6), chacune avec la fréquence de $\frac{1}{2}$.

L'application du masque 101 présente 2 erreurs différentes (3,5), chacune avec la fréquence de $\frac{1}{2}$. L'application du masque 100 ne présente que l'erreur 4, avec une fréquence de 1. L'application du masque 011 présente 2 erreurs différentes (1,3), chacune avec la fréquence de $\frac{1}{2}$. L'application du masque 010 ne présente que l'erreur 2, avec une fréquence de 1.

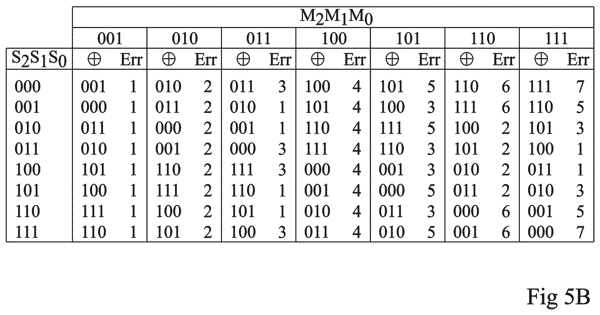

La figure 5B est un tableau reprenant les valeurs d'erreur couvertes par chaque masque dans l'exemple particulier ci-dessus avec R=[-6,6], k=3 et y=8. Une colonne $S_2S_1S_0$ représente les 3 bits les moins significatifs de la sortie S. Sept colonnes $M_0M_1M_2$ illustrent le résultat ($\oplus$) de l'application du masque sur chacune des valeurs de sortie et les valeurs d'erreur résultantes (Err).

Par exemple, une première colonne illustre l'application du masque 001 sur l'ensemble des trois bits les moins significatifs possibles de la sortie S. Les valeurs d'erreur sont toutes égales à 1 dans tous ces cas. Cela signifie que l'application du masque 001 couvre la valeur d'erreur 1 avec une fréquence égale à 1. De même, l'application des masques 010 et 100, comprenant chacun u=1 bit égal à 1, couvre chacun une valeur d'erreur unique. L'application du masque 010 couvre la valeur d'erreur égale à 2 et l'application du masque 100 couvre la valeur d'erreur égale à 4.

L'application des masques 011, 101 et 110, comprenant chacun u=2 bits égaux à 1, couvre respectivement deux valeurs d'erreur différentes, chacune avec une fréquence de 1/2. Le masque 011 couvre les valeurs d'erreur 1 et 3. Le masque 101 couvre les valeurs d'erreur 3 et 6 et le masque 110 couvre les valeurs d'erreur 2 et 6.

L'application du masque 111, comprenant u=3 bits égaux à 1, couvre les quatre valeurs d'erreur différentes 1, 3, 5 et 7.

En se référant à nouveau à la figure 3B, dans une étape 312 (MASK DISTRIBUTION), le dispositif 300 est configuré pour déterminer la distribution des valeurs du masque, afin de produire une distribution gaussienne des valeurs d'erreur. En particulier, la distribution des masques n'est pas nécessairement une distribution gaussienne.

Par exemple, le dispositif 300 part de la plus grande valeur de masque et vérifie si les éventuelles erreurs associées sont présentes dans l'histogramme positif HP. Pour chaque valeur d'erreur positive x, une valeur de couverture, désignée par C(x), correspond au nombre de fois où l'erreur x doit être couverte et une valeur N(M) correspond au nombre de fois où la valeur de masque M doit être générée afin de couvrir les erreurs. Une erreur est couverte par un masque M lorsqu'elle est générée par l'application du masque. L'algorithme mis en œuvre par les instructions 306, par exemple, commence par C(x) = HP(x) et itère jusqu'à C(x) = 0, pour chaque x. Lorsque toutes les valeurs de couverture sont égales à 0, toutes les erreurs ont été couvertes correctement.

Si un masque M crée au moins une erreur en dehors de l'intervalle R, et donc non présente dans C(x), cette valeur de masque ne doit jamais se produire et N(M) est alors fixée égale à 0.

Si toutes les erreurs créées par un masque M sont présentes dans l'intervalle R, le dispositif 300, sous l'exécution des instructions 306, traite les valeurs d'erreur de la plus grande à la plus petite. Il y a deux cas, soit un premier cas dans lequel la valeur de l'erreur est couverte uniquement par cette valeur de masque, soit un deuxième cas dans lequel la valeur de l'erreur est couverte par un ou plusieurs masques plus petits.

Dans le premier cas, pour une valeur d'erreur x1 couverte uniquement par un masque M et lorsque le masque M couvre plusieurs valeurs d'erreur, l'algorithme mis en œuvre par les instructions 306 permet de couvrir correctement la valeur d'erreur x1 en divisant C(x1) par la fréquence de x1, déterminée à l'étape 311. La valeur de couverture N(M) est ainsi évaluée. La valeur N(M) est donc répartie en fonction des fréquences d'erreur. Par ailleurs, la valeur N(M) est soustraite des valeurs de couverture C(x) des autres valeurs d'erreur couvertes par le masque M. La valeur de couverture C(x1) est alors décrémentée à 0 tandis que les autres valeurs de couverture C(x) sont diminuées de N(M) multiplié par la fréquence de chaque autre valeur d'erreur. Dans le deuxième cas, lorsque l'erreur est couverte par un autre masque plus petit, la valeur de couverture est diminuée de C(x1), où x1 est une valeur d'erreur couverte uniquement par le masque M. Ensuite, en répétant le processus, ce type d'erreur sera traité comme une erreur de premier cas pendant le traitement du plus petit masque qui la couvre.

Le même processus est répété pour chaque valeur de masque. Une table de recherche, avec les bits de masque en entrée et le nombre de fois où les valeurs de masque doivent apparaître en sortie, est, par exemple, générée par le dispositif 300. La somme de tous les N(M) est égale à $2^y$. À la fin de l'étape 312, la distribution des masques est déterminée. Par conséquent, les valeurs de masque et l'occurrence avec laquelle chaque masque doit être généré par le circuit d'approximation 104 sont connues.

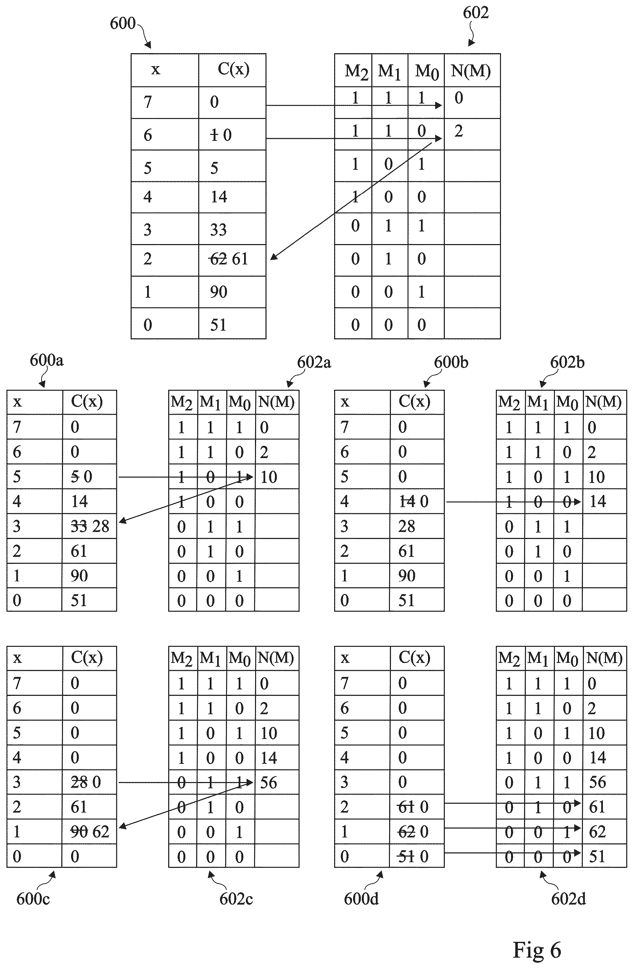

La figure 6 représente l'algorithme d'extraction de la distribution des masques, par l'intermédiaire de la manipulation de tables de recherche, selon un mode de réalisation de la présente description. En particulier, l'algorithme illustré permet de déterminer la distribution des masques pour l'exemple exposé en relation avec l'étape 310, avec R= [-6,6], k=3 et y=8.

Un premier tableau 600 comprend les valeurs d'erreur déterminées par l'application de l'étape 311, par exemple illustrée par la figure 5. Les valeurs d'erreur possibles x sont des nombres entiers compris entre 0 et 7. Une colonne C(x) comprend le nombre souhaité d'occurrences pour le nombre entier associé. Comme la distribution des erreurs se situe dans l'intervalle R=[-6,6], la valeur d'erreur x=7 ne doit pas se produire. La valeur C(7) est donc égale à 0. Pour la valeur d'erreur x comprise entre 1 et 6, la valeur associée C(x) est égale à Hp(x), c'est-à-dire à H(x), qui est le nombre entier le plus proche de la valeur $2^9 \times h(x)$. La valeur C(0) correspond au nombre entier le plus proche de la valeur $2^8 \times h(x)$. Ainsi, C(6) =1, C(5)=5, C(4)=14, C(3)=33, C(2)=62, C(1)=90 et C(0)=5. L'objectif de l'algorithme est de traiter itérativement la valeur du masque jusqu'à ce que toute la colonne C(x) soit remplie par la valeur 0.

Un tableau 602 représente l'application de l'algorithme aux valeurs de masque 111 et 110. Étant donné que l'application de la valeur de masque 111 génère la valeur d'erreur 7 et que C(7)=0, l'application de l'algorithme attribue la valeur 0 à l'occurrence N(111).

L'application du masque 110 génère les valeurs d'erreur 2 et 6. La valeur d'erreur 6 est uniquement couverte par ce masque, tandis que la valeur 2 est également couverte par le masque 010. Par conséquent, comme la fréquence de la valeur d'erreur 6, par l'intermédiaire du masque 110, est égale à ½, l'occurrence N(110) est égale à C(6)/0,5, c'est-à-dire N(110)=2. La valeur de couverture C(6) est alors réattribuée pour être égale à 0 et la valeur de couverture C(2) est révisée pour être égale à C(2)-N(110)*0,5= C(2)-C(6)=61.

Une fois le masque 110 traité, l'algorithme est appliqué à la valeur du masque 101. L'application de l'algorithme au masque 101 est illustrée par les tableaux 600a et 602a. L'application de la valeur de masque 101 génère les valeurs d'erreur 3 et 5, chacune avec une fréquence de 1/2. La valeur d'erreur 5 est uniquement couverte par cette valeur de masque 101, tandis que la valeur d'erreur 3 est également couverte par la valeur de masque 011. Par conséquent, l'occurrence N(101) est déterminée comme étant égale à C(5)/0,5, c'est-à-dire à 10. La valeur de couverture C(5) est alors diminuée jusqu'à 0 et la valeur de couverture C(3) est révisée pour être égale à C(3)-C(5), c'est-à-dire à 28.

Une fois le masque 101 traité, l'algorithme est appliqué à la valeur du masque 100. L'application de l'algorithme à la valeur de masque 100 est illustrée par les tableaux 600b et 602b. L'application de la valeur de masque 100 ne génère que la valeur d'erreur 4. La valeur d'erreur 4 n'est couverte que par ce masque. Par conséquent, l'occurrence N(100) est déterminée comme étant égale à C(4), c'est-à-dire à 14. La valeur de couverture C(4) est révisée pour être égale à 0.

Une fois la valeur de masque 100 traitée, l'algorithme est appliqué à la valeur de masque 011. L'application à la valeur de masque 011 est illustrée par les tableaux 600c et 602c. L'application de la valeur de masque 011 génère les valeurs d'erreur 1 et 3, chacune avec une fréquence de 1/2. La valeur d'erreur 3 n'est plus couverte que par cette valeur de masque 011, tandis que la valeur d'erreur 1 est également couverte par la valeur de masque 001. Par conséquent, l'occurrence N(011) est déterminée comme étant égale à C(3)/0,5, c'est-à-dire à 56. La valeur de couverture C(3) est alors révisée pour être égale à 0 et la valeur de couverture C(1) est révisée pour être égale à C(1)-C(3), c'est-à-dire à 62.

Une fois la valeur de masque 011 traitée, l'algorithme est appliqué à la valeur de masque 010. L'application à la valeur de masque 010, puis aux valeurs de masque 001 et 000, est illustré par les tableaux 600d et 602d. L'application de la valeur de masque 010 ne génère que la valeur d'erreur 2. La valeur d'erreur 2 n'est désormais plus couverte que par ce masque. Par conséquent, l'occurrence N(010) est déterminée comme étant égale à C(2), c'est-à-dire à 61. La valeur de couverture C(2) est donc révisée pour être égale à 0. L'application de la valeur de masque 001 ne génère que la valeur d'erreur 1. La valeur d'erreur 1 n'est désormais plus couverte que par ce masque. Par conséquent, l'occurrence N(001) est déterminée comme étant égale à C(1), c'est-à-dire à 62. La valeur de couverture C(1) est donc révisée pour être égale à 0. L'application de la valeur de masque 000 ne génère, par définition, que la valeur d'erreur 0. La valeur d'erreur 0 n'est couverte que par ce masque. Par conséquent, l'occurrence N(000) est déterminée comme étant égale à C(0), c'est-à-dire à 51. La valeur de couverture C(0) est donc révisée pour être égale à 0. La colonne C(x) est, à ce stade, remplie de valeurs 0. La distribution des masques est alors déterminée, ce qui termine l'étape 312.

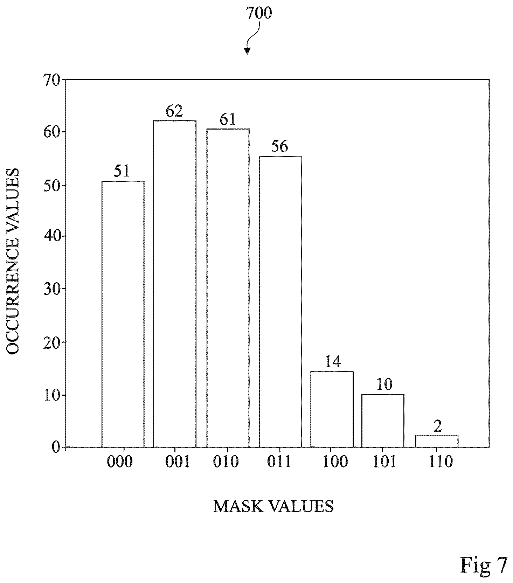

La figure 7 est un histogramme 700 de la distribution des masques déterminée dans l'exemple présenté en relation avec l'étape 310 de la figure 3B, avec R=[-6,6], k=3 et y=8. En particulier, les valeurs d'occurrence (OCCURENCE VALUES) de chacune des valeurs de masque (MASK VALUES) sont celles obtenues par l'application de l'algorithme décrit en relation avec la figure 6.

En se référant de nouveau à la figure 3B, à l'étape 313 (BOOLEAN FUNCTION), les fonctions booléennes $B_0$ à $B_{k-1}$ sont écrites, par le dispositif 300, pour couvrir la distribution des masques.

Le fonctionnement du circuit d'approximation 104 peut être représenté par une table de vérité à y entrées et k sorties. La réalisation de l'étape 313 permet de déterminer la position de chaque valeur de masque dans la table de vérité.

Dans un exemple, le dispositif 300, sous l'exécution des instructions 306, est configuré pour compléter la table de vérité en insérant les valeurs du masque afin de respecter leurs occurrences.

Un autre exemple de détermination des fonctions booléennes $B_j$ est, par exemple, décrit à la page web suivante https://math.stackexchange.com/questions/4935662/given-the-output-frequencies-create-a-truth-table-with-minimal-boolean-function. Dans cet exemple, des variables booléennes $A_j$ sont construites sur la base des entrées $a_0,..., a_{y-1}$ du circuit d'approximation 104, de sorte que les ensembles $Set[j]$ = $\{a|A_j (a) = 1\}$ soient croissants. En d'autres termes, les fonctions booléennes $A_j$ sont construites de sorte à satisfaire $Set[0] \subset Set[1] \subset \cdots \subset Set[m - 1]$ , où m est le nombre des différentes valeurs de masque. En particulier, comme il est possible qu'un masque parmi les $2^k$ masques possibles génère une valeur d'erreur en dehors de l'intervalle R, la valeur de m est inférieure ou égale à $2^k$. Ces ensembles ont des cardinalités prescrites définies par la distribution des masques N(M). Les ensembles $Set_j$ sont donc interprétés comme les unions croissantes de cellules dans un diagramme de Venn pour $M_{k-1} ,..., M_0$ et obtiennent les bits de masque correspondant aux sorties du circuit d'approximation 104. Les variables booléennes $A_j$ représentent des variables intermédiaires entre la variable de sortie M et les variables d'entrée a du circuit d'approximation.

Le dispositif 300 est en outre configuré, par l'exécution des instructions 306, pour extraire les fonctions booléennes d'un masque donné à partir d'un diagramme de Venn. Pour chaque masque M, chaque bit $M_i$ du masque, qui est représenté par l'union de plusieurs intervalles, est constitué de cellules adjacentes du diagramme de Venn. Le nombre de portes ET et/ou OU utilisées pour générer le bit $M_i$ est par exemple égal au nombre d'extrémités intérieures des intervalles moins un. Les extrémités intérieures des intervalles sont celles qui se trouvent à l'intérieur du diagramme de Venn. Étant donné que deux codages égaux ne peuvent pas coexister, à chaque limite entre deux cellules, il y a au moins une extrémité intérieure si l'on considère l'ensemble des k bits. Par conséquent, le nombre minimal d'extrémités intérieures est égal au nombre de séparations internes de l'espace, soit m-1. Le nombre Nb de portes est tel que [Math 2]

$$Nb = min \sum_{i=1...k}(E_j - 1) = min \sum_{j=1...k} E_j - k = m - 1 - k \,.$$

Le diagramme de Venn n'est pas unique. Le dispositif 300 est par exemple configuré pour déterminer le diagramme de Venn en appliquant l'algorithme de l'asymptote. Cet algorithme construit la séquence en itérant à travers des représentations binaires et en validant des modèles spécifiques pour minimiser le nombre d'intervalles internes. Un avantage de cet algorithme est qu'il est bien adapté aux écarts-types de grande valeur.

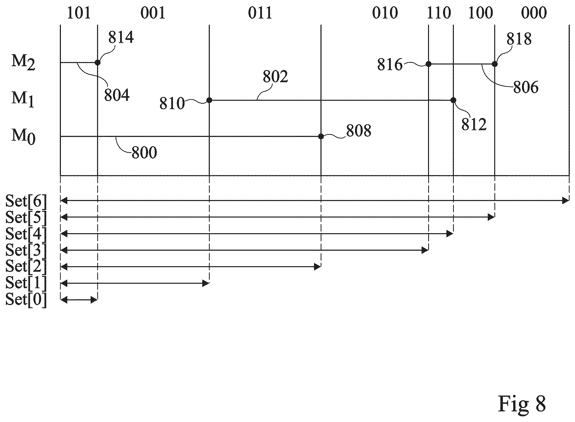

La figure 8 est un diagramme de Venn à partir duquel des fonctions booléennes sont, par exemple, extraites. En particulier, le diagramme de Venn est associé à l'exemple exposé en relation avec l'étape 310 de la figure 3B, avec R=[-6,6], k=3 et y=8.

Une ligne 800 coupe les masques ayant pour bit le moins significatif $M_0$ un bit égal à 1. Une ligne 802 coupe les masques ayant pour bit $M_1$ un bit égal à 1. Deux lignes 804 et 806 sont telles que leur union est l'intersection des masques ayant pour bit le plus significatif $M_2$ un bit égal à 1. La longueur de chaque colonne, associée à une valeur de masque M, est liée à la valeur d'occurrence déterminée à l'étape 312 de la figure 3B. Les fonctions booléennes $B_0$, $B_1$ et $B_2$ pour exprimer les bits $M_0$, $M_1$ et $M_2$ respectivement impliquent l'utilisation de 0, 1 et 2 portes, correspondant à 1, 2 et 3 extrémités intérieures 808, 810, 812, 814, 816 et 818. En particulier, la ligne 800 ne comprend que l'extrémité intérieure 808. La ligne 802 comprend les extrémités intérieures 810 et 812. La ligne 804 ne comprend que les extrémités intérieures 814 et la ligne 806 comprend les extrémités intérieures 816 et 818.

Par ailleurs, le diagramme de Venn est divisé en 7 ensembles Set [0] à Set[6], tels que **Set[0]** ⊂ *Set*[1] ⊂ · · · ⊂ *Set* [6]. L'ensemble Set[6] couvre toutes les longueurs du diagramme de Venn. L'ensemble Set[5] correspond à l'ensemble Set[6], duquel est retirée la colonne associée à la valeur de masque 000. L'ensemble Set[4] correspond à l'ensemble Set [5], duquel est retirée la colonne associée à la valeur du masque 100. L'ensemble Set[3] correspond à l'ensemble Set[4], duquel est retirée la colonne associée à la valeur de masque 110. L'ensemble Set[2] correspond à S[3], duquel est retirée la colonne associée à la valeur de masque 010. L'ensemble Set[1] correspond à Set[2], duquel est retirée la colonne associée à la valeur de masque 011. L'ensemble Set[0] correspond à l'ensemble Set[1], duquel est retirée la colonne associée à la valeur de masque 001. L'ensemble Set[0] ne comprend que la colonne associée à la valeur de masque 101. Le bit $M_0$ est égal à $A_4$. Les variables booléennes A expriment lorsque les bits du masque sont égaux à 1, ce qui correspond aux fonctions booléennes B. Le bit $M_1$ est égal à $A_2 \& \overline{A_5}$ et le bit $M_2$ est égal à $A_1 \& \overline{A_3} | A_6$. En particulier, la cardinalité de l'ensemble S[j] est définie par la distribution des masques.

L'étape 313 de la figure 3B comprend en outre la détermination, par le dispositif 300, de la relation entre les variables booléennes et les entrées $a_0$ à $a_{y-1}$ du circuit d'approximation 104. Cette détermination est par exemple réalisée par l'exécution des instructions 306.

Les instructions 306, lorsqu'elles sont exécutées, permettent d'obtenir une fonction booléenne avec un nombre spécifique de 1 dans l'espace de $2^y$ cas au total créés par les valeurs d'entrée. Le dispositif 300 est alors configuré pour générer une pluralité de fonctions booléennes et les pondérer en fonction d'une fonction de coût. Un exemple de fonction de coût est donné dans le tableau suivant :

[Table 1]

| Porte | Coût |
|---|---|
| NON | 1 |
| NON-ET | N |
| NON-OU | N |
| ET | n+1 |
| OU | n+1 |

Où les portes sont des portes à n entrées.

La porte NON comprend par exemple deux transistors. Les portes NON-OU et NON-ET comprennent par exemple chacune deux transistors par entrée, et leur coût en termes de nombre de transistors dépend donc du nombre d'entrées. Les portes ET et OU sont par exemple obtenues par négation des sorties des portes NON-ET et NON-OU respectivement. Leur coût en termes de nombre de transistors est égal au nombre d'entrées plus un.

Le dispositif 300 est en outre configuré pour calculer les dimensions $Dim_j$ de chaque variable $A_j$, sur la base du diagramme de Venn et de la distribution des masques. Par exemple, pour un écart-type de 2, $Dim_0 = N(101) = 10$, $Dim_1 = Dim_0 + N(001) = 72$, $Dim_2 = Dim_1 + N(011) = 128$, $Dim_3 = Dim_2 + N(010) = 189$, $Dim_4 = Dim_3 + N(110) = 191$, $Dim_5 = Dim_4 + N(100) = 205$, $Dim_6 = Dim_5 + N(000) = 256 = 2^y$.

Dans un autre exemple, le dispositif 300 est configuré pour effectuer une recherche par dichotomie pour tous les processus. Cette recherche commence par une fonction $F_j$ qui évalue l'une des dimensions $Dim_j$. Par exemple, $F_4$ est une fonction représentant la variable booléenne $A_4$. A partir de là, connaissant $A_4$, le dispositif 300 est configuré pour déterminer soit $A_3$, soit $A_5$ avec de nouvelles fonctions "temporaires" F' qui sont obtenues en modifiant $F_4 = A_4$. Cette recherche n'est par exemple utilisée que pour évaluer une seule variable A lorsque l'application du procédé ci-dessus n'est pas satisfaisante. En tout état de cause, il y aurait une fonction F pour chaque dimension $Dim_j$. Il y a donc 6 fonctions différentes $F_j$, chacune représentant une variable booléenne $A_j$. La fonction booléenne $F_j$ comprend exactement Dim 1. La fonction booléenne $F_j$ peut être représentée par une table de vérité à y entrées. L'entrée $a_{y-1}$ est par exemple la première contribution à la fonction F. Si $Dim_j > 2^{y-1}$, le nombre peut être augmenté à l'aide d'une porte OU avec les entrées successives, donc $F_j = a_{y-1} | a_{y-2}$. Si au contraire $Dim_j < 2^{y-1}$, le nombre est réduit en utilisant une porte ET avec les entrées successives, donc $F_j = a_{y-1} \& a_{y-2}$. Le processus est répété jusqu'à ce que le nombre de cas identifiés par $F_j$ dans la table de vérité soit égal à $Dim_j$.

Dans un autre exemple, la détermination de $F(Dim_j)$ est effectuée, par le dispositif 300, à partir d'un $F(Dim_i)$ donné par une recherche rapide par bissection. La boucle principale génère des fonctions booléennes, et le dispositif 300 les stocke dans un vecteur de Heap H, puis sélectionne la moins chère pour l'ajouter à un vecteur W, représentant un code du circuit booléen actuel.

La recherche par dichotomie est par exemple appliquée par le dispositif 300 pour tout $Dim_j$ afin de créer des fonctions booléennes avec exactement $Dim_j$ 1 et de stocker $[A_j(U), U(a)]$ dans W, où $U(a)$ représente toutes les fonctions booléennes intermédiaires nécessaires pour obtenir $A_j(a)$ à partir des variables d'entrée $a$, comprenant les y bits $a_0$ à $a_{y-1}$, du circuit d'approximation 104. Le vecteur H est rempli avec toutes les combinaisons possibles qui peuvent être obtenues en une étape à partir des éléments de W, à l'exception de $A_j$. Ce processus s'arrête lorsque la capacité du vecteur Heap, par exemple fixée par l'utilisateur, est atteinte, ou si toutes les combinaisons (NOT(F1),F1) ; (AND(F1, F2),OR(F1, F2)) et (AND(F1, F2, F3),OR(F1, F2, F3)), où F1, F2 et F3 représentent des fonctions stockées dans W, sont prises en considération. Le dispositif 300 est alors configuré pour générer une fonction booléenne F telle que le nombre de 1 donné par AND $(A_j, F)$ soit égal à $BDim_{j+1}$ ou que le nombre de 1 donné par OR$(A_j,F)$ soit égal à $Dim_{j-1}$. Les fonctions pour le $A_i$ suivant sont alors construites par le dispositif 300 en utilisant le même processus, c'est-à-dire en utilisant AND pour $i = j + 1$ et OR pour $i = j - 1$. Le coût de cette construction dépend du coût initial de F et de sa provenance, qui peut être soit W, soit H.

Dans le cas où aucune combinaison de fonctions n'est trouvée, par exemple si les fonctions générées par le dispositif 300 ne conviennent pas à l'utilisateur, le dispositif 300 est configuré pour effectuer une autre recherche par dichotomie, qui peut construire des fonctions avec n'importe quel nombre de 1. Une fois une fonction trouvée, la paire $AI$ - $\overline{AI}$ et toutes les fonctions intermédiaires U sont stockées dans W. Le vecteur H est alors mis à jour avec les nouvelles combinaisons. Le dispositif 300 est alors configuré pour répéter le processus pour la paire suivante, jusqu'à ce que toutes les variables booléennes A soient évaluées. La boucle complète est appliquée à partir de toutes les $Dim_j$ **et** seul le résultat ayant le coût minimal est utilisé pour générer le circuit final.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le procédé mis en œuvre pour obtenir les fonctions booléennes peut varier.

Enfin, la mise en œuvre pratique des modes de réalisation et variantes décrits est à la portée de la personne du métier à partir des indications fonctionnelles données ci-dessus.


### Revendications

**1.** Dispositif (100) configuré pour générer une valeur approximative en ajoutant du bruit à une sortie d'un circuit arithmétique équilibré (102), le dispositif comprenant :

   - le circuit arithmétique équilibré configuré pour générer une première valeur (S) codée par N bits, N étant un nombre entier supérieur ou égal à 2 ;
   - un circuit d'approximation (104) configuré pour générer un masque (M) de k bits, k étant un nombre entier plus petit que N, sur la base d'une première distribution n'étant pas une distribution gaussienne ; et
   - un circuit logique (106) configuré pour générer une deuxième valeur de N bits (OUTPUT) basée sur la première valeur (S), les k bits les moins significatifs de la deuxième valeur étant générés en appliquant le masque aux k bits les moins significatifs de la première valeur, les N-k bits les plus significatifs des deuxièmes valeurs étant égaux aux N-k bits les plus significatifs de la première valeur,

   la première distribution étant telle que la deuxième valeur correspond à la première valeur avec une valeur d'erreur ajoutée, la valeur d'erreur ajoutée ayant une distribution gaussienne d'écart-type $\sigma$.

**2.** Dispositif selon la revendication 1, dans lequel le circuit logique est configuré pour appliquer une opération OU-EXCLUSIF entre la valeur du masque (M) et les k bits les moins significatifs de la première valeur (S).

**3.** Dispositif selon la revendication 1 ou 2, dans lequel les k-bits du masque (M) sont automatiquement programmés à 0, sur la base d'un signal de commande.

**4.** Dispositif selon la revendication 3, comprenant en outre une porte ET configurée pour effectuer une opération ET entre le masque (M) et le signal de commande, le circuit logique (106) étant configuré pour générer la deuxième valeur sur la base de la sortie de la porte ET.

**5.** Dispositif selon l'une quelconque des revendications 1 à 4, dans lequel le circuit d'approximation (104) est configuré pour générer le masque (M) sur la base d'une entrée codée par un nombre y de bits, y étant un nombre entier, généré par une source d'entropie.

**6.** Dispositif selon la revendication 5, dans lequel la source d'entropie est un générateur de nombres aléatoires matériel (108) .

**7.** Dispositif selon la revendication 5 ou 6, dans lequel la source d'entropie est en outre configurée pour fournir une valeur d'entrée au circuit arithmétique équilibré (102).

**8.** Dispositif selon l'une quelconque des revendications 5 à 7, dans lequel le circuit d'approximation (104) comprend un nombre k de fonctions booléennes **($B_0$,..., $B_{k-1}$),** chaque fonction booléenne étant configurée pour générer un bit du masque sur la base de l'entrée à y bits.

**9.** Dispositif selon l'une quelconque des revendications 1 à 8, dans lequel le circuit arithmétique équilibré (102) est un circuit additionneur.

**10.** Dispositif selon l'une quelconque des revendications 1 à 9, dans lequel le circuit logique comprend un nombre k de portes OU-EXCLUSIF (200_0, 200_(k-1)), la i-ième porte OU-EXCLUSIF, pour **$0 \leq i \leq k - 1$,** étant configurée pour effectuer une opération OU-EXCLUSIF entre le (i+1)-ième bit le moins significatif (**$M_i$**) du masque et le (i+1)-ième bit le moins significatif (**$S_i$**) de la première valeur.

**11.** Dispositif selon l'une quelconque des revendications 1 à 10, dans lequel la deuxième valeur est fournie à un circuit configuré pour effectuer une opération de cryptographie post-quantique sur la base de la deuxième valeur.

**12.** Procédé de génération d'une valeur approximative correspondant à une valeur arithmétique à laquelle est ajouté un bruit (e) ayant une distribution gaussienne d'écart-type σ, le procédé comprenant :

- la génération d'une première valeur de N bits, N étant un nombre entier, par un circuit arithmétique équilibré (102), N étant un nombre entier supérieur ou égal à 1 ;
- la génération d'un masque (M) de k bits, k étant un nombre entier inférieur ou égal à N, par un circuit d'approximation (102), sur la base d'une première distribution n'étant pas une distribution gaussienne ; et
- la génération d'une deuxième valeur, par un circuit logique (106), en appliquant le masque aux k bits les moins significatifs de la première valeur, les N-k bits les plus significatifs de la deuxième valeur étant égaux à la première valeur ;

la première distribution étant telle que la deuxième valeur correspond à la première valeur avec une valeur d'erreur ajoutée, la valeur d'erreur ajoutée ayant une distribution gaussienne d'écart-type σ.

**13.** Procédé de conception d'une architecture du circuit d'approximation (104) selon l'une quelconque des revendications 1 à 11, le procédé comprenant :

- l'identification, par un dispositif externe (300), d'une distribution gaussienne basée sur la valeur de l'écart-type, l'identification comprenant en outre le calcul, par le dispositif externe, de la valeur des nombres entiers k et y ;
- pour chaque valeur de masque de k bits, la détermination, par le dispositif externe, d'au moins une valeur d'erreur associée en appliquant le masque à chaque valeur de k bits, chaque valeur d'erreur ajoutée étant associée à une fréquence pour la valeur de masque ;
- la détermination, par le dispositif externe, de la première distribution, sur la base des valeurs d'erreur et de leur fréquence associée pour chaque valeur de masque ; et
- la détermination, par le dispositif (300), de l'architecture du circuit d'approximation, l'architecture déterminée étant capable de générer des valeurs de masque à k bits, sur la base de valeurs d'entrée de y bits, conformément à la première distribution.

**14.** Procédé selon la revendication 13, dans lequel le dispositif externe (300) est configuré pour déterminer la valeur du nombre entier y en résolvant l'équation **$2^{y+1} \times h(P\sigma) \simeq 1$**, où h est la fonction de densité gaussienne pour la distribution gaussienne de moyenne 0 et d'écart-type σ, et pour déterminer la valeur de k en résolvant l'équation $2^{k-1} - 1 < b \leq 2^k - 1$, où P est un nombre réel positif prédéterminé.

**15.** Procédé selon la revendication 13 ou 14, dans lequel la détermination, par le dispositif (300), de l'architecture du circuit d'approximation (104) comprend la détermination d'un nombre k de fonctions booléennes ($B_0$,..., $B_{k-1}$), chaque fonction booléenne étant configurée pour générer un bit du masque, sur la base de l'entrée à y bits.

Fig 1

Fig 2

304

NV   MEM

306

INSTRUCTIONS

302

CPU

300

308

INTERFACE

Fig 3A

ERROR DISTRIBUTION
IDENTIFICATION

310

RELATION BETWEEN
MASK AND ERROR VALUES

311

MASK DISTRIBUTION

312

BOOLEAN FUNCTION

313

Fig 3B

Fig 4A

Fig 4B

500

502

| M$_2$ | M$_1$ | M$_0$ |
|---|---|---|
| 1 | 1 | 1 |
| 1 | 1 | 0 |
| 1 | 0 | 1 |
| 1 | 0 | 0 |
| 0 | 1 | 1 |
| 0 | 1 | 0 |
| 0 | 0 | 1 |

| S$_2$ | S$_1$ | S$_0$ |
|---|---|---|
| 0 | 0 | 0 |
| 0 | 0 | 1 |
| 0 | 1 | 0 |
| 0 | 1 | 1 |
| 1 | 0 | 0 |
| 1 | 0 | 1 |
| 1 | 1 | 0 |
| 1 | 1 | 1 |

Fig 5A

| $S_2S_1S_0$ | $M_2M_1M_0$ | | | | | | | | | | | | |
| --- | --- | --- | --- | --- | --- | --- | --- | --- | --- | --- | --- | --- | --- |
| | 001 | | 010 | | 011 | | 100 | | 101 | | 110 | | 111 | |
| | ⊕ | Err | ⊕ | Err | ⊕ | Err | ⊕ | Err | ⊕ | Err | ⊕ | Err | ⊕ | Err |
| 000 | 001 | 1 | 010 | 2 | 011 | 3 | 100 | 4 | 101 | 5 | 110 | 6 | 111 | 7 |
| 001 | 000 | 1 | 011 | 2 | 010 | 1 | 101 | 4 | 100 | 3 | 111 | 6 | 110 | 5 |
| 010 | 011 | 1 | 000 | 2 | 001 | 1 | 110 | 4 | 111 | 5 | 100 | 2 | 101 | 3 |
| 011 | 010 | 1 | 001 | 2 | 000 | 3 | 111 | 4 | 110 | 3 | 101 | 2 | 100 | 1 |
| 100 | 101 | 1 | 110 | 2 | 111 | 3 | 000 | 4 | 001 | 3 | 010 | 2 | 011 | 1 |
| 101 | 100 | 1 | 111 | 2 | 110 | 1 | 001 | 4 | 000 | 5 | 011 | 2 | 010 | 3 |
| 110 | 111 | 1 | 100 | 2 | 101 | 1 | 010 | 4 | 011 | 3 | 000 | 6 | 001 | 5 |
| 111 | 110 | 1 | 101 | 2 | 100 | 3 | 011 | 4 | 010 | 5 | 001 | 6 | 000 | 7 |

Fig 5B

600

602

| x | C(x) |
|---|------|
| 7 | 0 |
| 6 | ~~1~~ 0 |
| 5 | 5 |
| 4 | 14 |
| 3 | 33 |
| 2 | ~~62~~ 61 |
| 1 | 90 |
| 0 | 51 |

| $M_2$ | $M_1$ | $M_0$ | N(M) |
|-------|-------|-------|------|
| 1 | 1 | 1 | 0 |
| 1 | 1 | 0 | 2 |
| 1 | 0 | 1 | |
| ~~1~~ | 0 | 0 | |
| 0 | 1 | 1 | |
| 0 | 1 | 0 | |
| 0 | 0 | 1 | |
| 0 | 0 | 0 | |

600a

602a

| x | C(x) |
|---|------|
| 7 | 0 |
| 6 | 0 |
| 5 | ~~5~~ 0 |
| 4 | 14 |
| 3 | ~~33~~ 28 |
| 2 | 61 |
| 1 | 90 |
| 0 | 51 |

| $M_2$ | $M_1$ | $M_0$ | N(M) |
|-------|-------|-------|------|
| 1 | 1 | 1 | 0 |
| 1 | 1 | 0 | 2 |
| ~~1~~ | ~~0~~ | ~~1~~ | 10 |
| ~~1~~ | 0 | 0 | |
| 0 | 1 | 1 | |
| 0 | 1 | 0 | |
| 0 | 0 | 1 | |
| 0 | 0 | 0 | |

600b

602b

| x | C(x) |
|---|------|
| 7 | 0 |
| 6 | 0 |
| 5 | 0 |
| 4 | ~~14~~ 0 |
| 3 | 28 |
| 2 | 61 |
| 1 | 90 |
| 0 | 51 |

| $M_2$ | $M_1$ | $M_0$ | N(M) |
|-------|-------|-------|------|
| 1 | 1 | 1 | 0 |
| 1 | 1 | 0 | 2 |
| 1 | 0 | 1 | 10 |
| ~~1~~ | ~~0~~ | ~~0~~ | 14 |
| 0 | 1 | 1 | |
| 0 | 1 | 0 | |
| 0 | 0 | 1 | |
| 0 | 0 | 0 | |

| x | C(x) |
|---|------|
| 7 | 0 |
| 6 | 0 |
| 5 | 0 |
| 4 | 0 |
| 3 | ~~28~~ 0 |
| 2 | 61 |
| 1 | ~~90~~ 62 |
| 0 | 0 |

| $M_2$ | $M_1$ | $M_0$ | N(M) |
|-------|-------|-------|------|
| 1 | 1 | 1 | 0 |
| 1 | 1 | 0 | 2 |
| 1 | 0 | 1 | 10 |
| 1 | 0 | 0 | 14 |
| ~~0~~ | ~~1~~ | ~~1~~ | 56 |
| ~~0~~ | 1 | 0 | |
| 0 | 0 | 1 | |
| 0 | 0 | 0 | |

600c

602c

| x | C(x) |
|---|------|
| 7 | 0 |
| 6 | 0 |
| 5 | 0 |
| 4 | 0 |
| 3 | 0 |
| 2 | ~~61~~ 0 |
| 1 | ~~62~~ 0 |
| 0 | ~~51~~ 0 |

| $M_2$ | $M_1$ | $M_0$ | N(M) |
|-------|-------|-------|------|
| 1 | 1 | 1 | 0 |
| 1 | 1 | 0 | 2 |
| 1 | 0 | 1 | 10 |
| 1 | 0 | 0 | 14 |
| 0 | 1 | 1 | 56 |
| ~~0~~ | ~~1~~ | ~~0~~ | 61 |
| ~~0~~ | ~~0~~ | ~~1~~ | 62 |
| ~~0~~ | ~~0~~ | ~~0~~ | 51 |

600d

602d

Fig 6

700

Fig 7

Fig 8

Europäisches
Patentamt

European
Patent Office

Office européen
des brevets

# RAPPORT DE RECHERCHE EUROPEENNE

Numéro de la demande

EP 25 22 3205

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/156183 A1 (DURHAM DAVID M [US] ET AL) 23 mai 2019 (2019-05-23) <br> * alinéa [0029] - alinéa [0046] * <br> * alinéa [0068] - alinéa [0074] * <br> ----- | 1-15 | INV. <br> H04L9/00 <br> H04L9/30 |
| A | SCHNEIDER TOBIAS ET AL: "Efficiently Masking Binomial Sampling at Arbitrary Orders for Lattice-Based Crypto", 6 avril 2019 (2019-04-06), PUBLIC-KEY CRYPTOGRAPHY - PKC 2019; [LECTURE NOTES IN COMPUTER SCIENCE; LECT.NOTES COMPUTER], SPRINGER INTERNATIONAL PUBLISHING, CHAM, PAGE(S) 534 - 564, XP047682281, ISSN: 0302-9743 ISBN: 978-3-030-17258-9 [extrait le 2019-04-06] <br> * chapitres 2, 3, 4 * <br> ----- | 1-15 | |
| A | REPARAZ OSCAR ET AL: "A Masked Ring-LWE Implementation", 1 septembre 2015 (2015-09-01), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 683 - 702, XP047518722, ISBN: 978-3-319-10403-4 [extrait le 2015-09-01] <br> * chapitres 3, 4 * <br> ----- | 1-15 | **DOMAINES TECHNIQUES RECHERCHES (IPC)** <br><br> H04L |

Le présent rapport a été établi pour toutes les revendications

| Lieu de la recherche | Date d'achèvement de la recherche | Examinateur |
|---|---|---|
| Munich | 15 avril 2026 | Tenbieg, Christoph |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 3205

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-04-2026

| Document brevet cité<br>au rapport de recherche | Date de<br>publication | Membre(s) de la<br>famille de brevet(s) | Date de<br>publication |
|---|---|---|---|
| US 2019156183 A1 | 23-05-2019 | AUCUN | |

Pour tout renseignement concernant cette annexe : voir Journal Officiel de l'Office européen des brevets, No.12/82

EPO FORM P0460